# FASCICULE DE BREVET EUROPEEN

(11) **EP 2 114 729 B1**
(45) Date de publication et mention de la délivrance du brevet: **23.06.2010**
(21) Numéro de dépôt: 07870309.7
(22) Date de dépôt: 20.11.2007
(51) Int. Cl.: B60R 13/08

(54) **PANNEAU MONOBLOC DE PROTECTION ACOUSTIQUE POUR VEHICULE AUTOMOBILE**
EINTEILIGE SCHALLSCHUTZPLATTE FÜR KRAFTFAHRZEUG
SINGLE BLOCK SOUND PROTECTION PANEL FOR AUTOMOTIVE VEHICLE

(30) Priorité: 06.02.2007 FR 0700838
(43) Date de publication de la demande: 11.11.2009
(73) Titulaire: Centre d'etude et de recherche pour l'automobile (CERA), 51100 Reims (FR)
(72) Inventeur: BAYLE, André-Xavier, F-51100 Reims (FR); STEIN, Jean-Christophe, F-51400 Bouy (FR)
(74) Mandataire: Sayettat, Julien Christian
(86) Numéro de dépôt international: PCT/FR2007/001903
(87) Numéro de publication internationale: WO 2008/096050

(56) Documents cités:
- EP-A- 1 637 402
- WO-A-92/01587
- DE-A1- 3 200 627
- DE-A1- 10 026 100
- FR-A- 2 866 034

## Description

L'invention concerne un panneau de protection acoustique d'habillage d'une paroi de véhicule automobile et des architectures de montage d'un tel panneau.

Il est connu de réaliser un panneau de protection acoustique d'habillage d'une paroi de véhicule automobile, ledit panneau comprenant une couche poreuse supérieure, ladite couche poreuse étant disposée sur une couche d'étanchéité, par exemple à base d'élastomère thermoplastique chargé en charge minérale ou d'un film mince, ladite couche d'étanchéité étant disposée sur une couche d'envers élastique, par exemple à base de polyuréthane souple, formant ressort. Le document WO 92/01587 A1 décrit un panneau selon le préambule de la revendication 1.

Une telle réalisation permet de disposer d'un panneau créant une isolation acoustique de type masse ressort, la masse étant formée par la couche d'étanchéité pourvue de la couche poreuse et le ressort par la couche d'envers, et une absorption liée à la présence de la couche poreuse, permettant notamment d'atténuer les nuisances acoustiques issues des fuites, localisées en particulier au niveau des orifices réalisés dans le panneau pour la traversée d'organes tels qu'une colonne de direction.

Dans une telle réalisation, le panneau présente des propriétés de protection acoustique sensiblement homogènes. Or, il n'est pas forcément nécessaire de prévoir les mêmes propriétés de protection acoustique d'une zone à l'autre du panneau. Par exemple, il sera nécessaire de prévoir une protection maximale sur une zone donnée, alors qu'une protection plus faible peut suffire sur une autre zone. Dans la réalisation d'un tel panneau, on est obligé de prendre en compte les exigences de protection liées aux zones les plus exposées au bruit, ce qui aboutit à une surprotection des zones moins exposées.

Il en résulte des surcoûts et un surpoids du panneau qui peuvent être considérables.

L'invention a pour but de pallier ces inconvénients.

A cet effet, et selon un premier aspect, l'invention propose un panneau monobloc de protection acoustique d'habillage d'une paroi de véhicule automobile, ledit panneau comprenant :
- au moins une première zone comprenant, superposées successivement l'une sur l'autre, une couche poreuse supérieure, une couche d'étanchéité et une couche d'envers élastique formant ressort,
- au moins une deuxième zone comprenant au maximum deux desdites couches.

Dans cette description, les termes de positionnement dans l'espace (supérieur,...) sont pris en référence au panneau disposé dans le véhicule.

Selon un deuxième aspect, l'invention propose diverses architectures de montage d'un tel panneau.

D'autres particularités et avantages de l'invention apparaîtront dans la description qui suit, faite en référence aux figures jointes dans lesquelles :
• la figure 1 est une vue schématique en coupe partielle d'une architecture de montage d'un panneau selon un premier mode de réalisation,
• la figure 2 est une vue schématique en coupe partielle d'une architecture de montage d'un panneau selon un deuxième mode de réalisation,
• la figure 3 est une vue schématique en coupe partielle d'un panneau selon un mode de réalisation,
• la figure 4 est une vue schématique en coupe partielle d'une zone de panneau pourvue d'un orifice selon une réalisation.

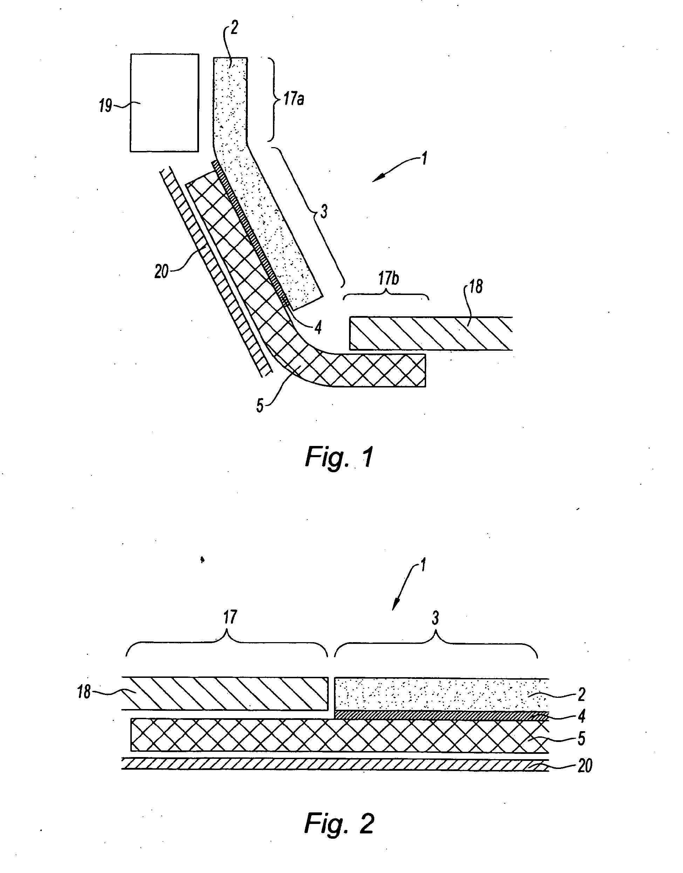

En référence aux figures 1 et 2, on décrit un panneau 1 monobloc de protection acoustique d'habillage d'une paroi 20 de véhicule automobile, ledit panneau comprenant :
• au moins une première zone 3 comprenant, superposées successivement l'une sur l'autre, une couche poreuse 2 supérieure, une couche d'étanchéité 4 et une couche d'envers élastique 5 formant ressort,
• au moins une deuxième zone 17 comprenant au maximum deux desdites couches.

Les réalisations représentées comprennent une deuxième zone 17,17b comprenant exclusivement la couche élastique 5.

Dans la réalisation de la figure 1, la deuxième zone haute 17a comprend exclusivement la couche poreuse 2.

La réalisation de la figure 2, où la deuxième zone 17 comprend exclusivement la couche élastique 5, peut s'appliquer à l'insonorisation d'une paroi 20 de tunnel. Selon une variante non représentée, la deuxième zone 17 comprend exclusivement la couche poreuse 2.

Dans une architecture de montage d'un tel panneau 1 d'insonorisation d'une paroi 20 de tunnel, la deuxième zone 17 est recouverte par un tapis 18. Dans le cas représenté ici, où la deuxième zone 17 est formée de la couche élastique 5, le tapis 18 est choisi étanche de sorte à réaliser un système d'isolation de type masse ressort. Si la deuxième zone 17 est formée de couche poreuse 2, le tapis 18 sera préférentiellement choisi poreux, de sorte à permettre une absorption dans ladite couche poreuse.

Selon une réalisation non représentée, la deuxième zone 17 comprend exclusivement la couche d'étanchéité 4 et la couche élastique 5, de sorte à réaliser un système d'isolation exclusivement de type masse ressort ne présentant pas de propriétés d'absorption, l'absorption pouvant néanmoins être réalisée par superposition d'une pièce poreuse au dessus de la couche d'étanchéité 4, par exemple un tapis 18.

Selon la réalisation représentée en figure 1, le panneau 1 forme insonorisant de paroi 20 de tablier, ledit panneau comprenant une deuxième zone haute 17a formée de couche poreuse 2, une première zone 3 médiane comprenant en outre une couche d'étanchéité 4 et une couche élastique 5, et une deuxième zone basse 17b formée de couche élastique 5. Selon une variante non représentée, la deuxième zone basse est formée de couche poreuse 2.

Dans une architecture de montage d'un tel panneau 1 d'insonorisation d'une paroi 20 de tablier, la deuxième zone basse 17b est recouverte par un tapis 18. Dans le cas représenté ici, où la deuxième zone basse 17b est formée de la couche élastique 5, le tapis 18 est choisi étanche de sorte à réaliser un système d'isolation de type masse ressort. Si la deuxième zone basse 17b est formée de couche poreuse 2, le tapis 18 sera préférentiellement choisi poreux, de sorte à permettre une absorption dans ladite couche poreuse. La deuxième zone haute 17a est disposée quant à elle ici en regard d'une boite à eau 19 et réalise une absorption acoustique

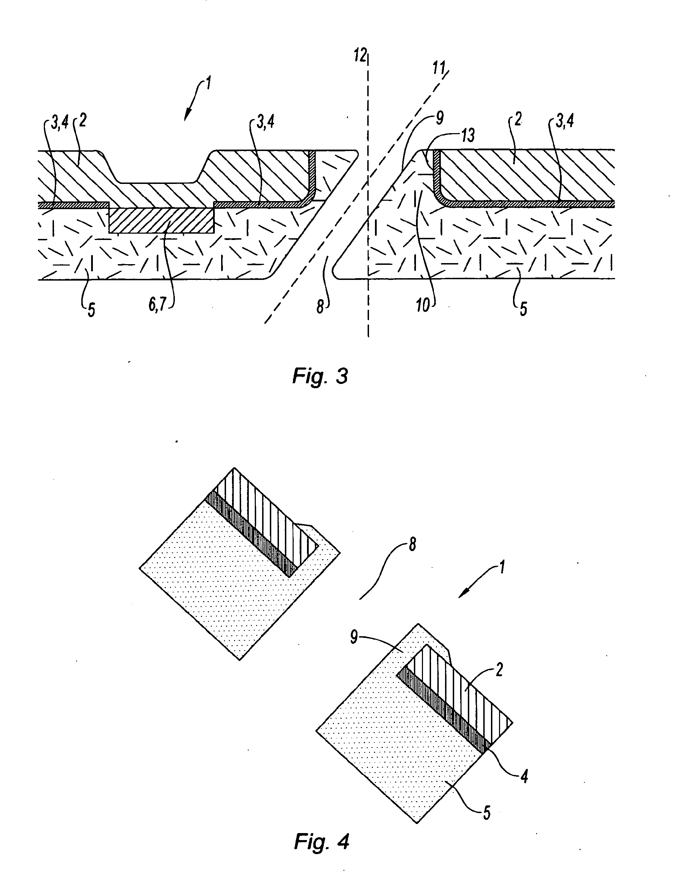

Selon une réalisation représentée en figures 3 et 4, on décrit un panneau 1 de protection acoustique d'habillage d'une paroi de véhicule automobile, ledit panneau comprenant une couche poreuse 2 supérieure, notamment à base de feutre ou de mousse souple refendue, au moins une première zone de ladite couche poreuse, correspondant à une première zone 3, étant disposée sur une couche d'étanchéité 4, ladite couche d'étanchéité étant disposée sur une couche d'envers 5 à base de polyuréthane souple, notamment de mousse de polyuréthane, formant ressort, ladite couche d'étanchéité étant formée par imprégnation d'une partie de l'épaisseur de ladite couche poreuse par le polyuréthane de ladite couche d'envers surmoulant ladite couche poreuse.

Par couche d'étanchéité 4, on entend notamment une couche conférant au complexe formé par la couche poreuse 2 et ladite couche d'étanchéité une résistance au passage de l'air supérieure à 5000 N.S.m⁻³.

Il peut être prévu, dans le cas de panneaux de géométrie complexe, que la couche poreuse 2 soit thermoformée.

La partie d'épaisseur de couche poreuse 2 imprégnée par le polyuréthanne doit être la plus faible possible, de sorte à laisser une épaisseur maximale de couche poreuse 2 non imprégnée, ceci afin de conférer à ladite couche poreuse des propriétés d'absorption optimisées. Elle doit néanmoins être suffisante pour permettre de réaliser l'étanchéité attendue.

Selon une réalisation, la partie imprégnée représente une fraction inférieure à 25% de l'épaisseur de la couche poreuse 2.

Plus particulièrement, la partie imprégnée peut même représenter une fraction inférieure à 20% de l'épaisseur de la couche poreuse 2.

Ponctuellement, certaines zones peuvent toutefois présenter une imprégnation plus importante, notamment les zones comprimées, mais, sur la majeure partie du panneau 1 tri couches, l'imprégnation est telle que décrite ci-dessus.

Dans un exemple de réalisation, la couche poreuse 2 présente une épaisseur générale de 7 mm, avec des zones comprimées localisées de 3 à 4 mm d'épaisseur, l'épaisseur de la partie imprégnée étant de 1 mm environ.

Selon une réalisation, la couche poreuse 2 est à base de mousse de masse surfacique comprise entre 100 et 1000 g/m².

Selon une autre réalisation, la couche poreuse 2 est à base de feutre de masse surfacique comprise entre 1000 et 2000 g/m².

Lorsque la couche poreuse 2 est à base de feutre, ce dernier peut être à base de fibres thermoplastiques et/ou végétales (coton,...) liées entre elles par un liant.

Dans le cas d'une application en environnement chaud, par exemple à proximité d'un moteur ou d'une ligne d'échappement, le feutre peut être prévu à base de fibres de verre liées entre elles par exemple par une résine thermodurcissable.

Selon une réalisation, la couche poreuse 2 présente une épaisseur et/ou une densité variable.

On peut à cet effet réaliser par exemple, lorsque la couche poreuse 2 comprend un matériau thermoplastique, une compression à chaud différenciée de ladite couche.

De façon non représentée, une zone de densité augmentée peut correspondre à une couronne périphérique autour d'un orifice destiné à permettre le passage d'un organe traversant, tels qu'une colonne de direction, ledit organe étant destiné à être en contact serrant avec ledit orifice. La densification opérée permet de diminuer la porosité de la couche poreuse 2 sur la couronne et ainsi d'améliorer l'étanchéité entre l'organe et la périphérie de l'orifice, de sorte à limiter les fuites acoustiques. Typiquement, on peut prévoir qu'une telle couronne présente une densité au moins deux fois plus importante que la densité de la couche poreuse 2 en zone non densifiée.

On décrit à présent d'autres modes d'obtention de zones de densité variable.

Comme explicité par exemple dans le document FR-2 866 034, on peut prévoir que la couche poreuse 2 soit à base de fibres disposées en remplissage dans une première cavité de moulage, de sorte à réaliser un matelas provisoire selon une première géométrie. Ledit matelas est alors conformé à chaud selon une deuxième géométrie, ce qui permet d'obtenir des zones d'épaisseur et/ou de densité variable.

En variante, de la fibre peut être projetée en épaisseur variable sur un fond de moule, ladite épaisseur étant contrôlée par le biais d'un robot de contrôle de la projection des fibres, un poinçon étant alors appliqué en compression à chaud sur les fibres pour donner lieu à une couche poreuse 2 tridimensionnelle.

Les réalisations basées sur du remplissage ou de la projection de fibres permettent notamment d'obtenir une couche poreuse 2 présentant au moins deux zones de surface minimum de 25 cm² dont la densité diffère d'au moins un facteur 1,5. Les zones de forte densité correspondent par exemple à des zones de rigidification ou, comme décrit précédemment, à une couronne périphérique d'un orifice.

Selon la réalisation de la figure 3, une couche de densité renforcée 6 étanche et souple est insérée, sur une zone de protection renforcée 7, entre la couche poreuse 2 et la couche d'envers 5, ladite couche de densité renforcée étant surmoulée par ladite couche d'envers.

Selon la réalisation de la figure 3, le panneau 1 comprend au moins un orifice de traversée 8 d'organe, la paroi 9 dudit orifice étant formée de mousse de la couche d'envers 5 enrobant la paroi d'un orifice annexe 10 de section supérieure pratiqué dans la couche poreuse 2, avant l'opération de surmoulage.

Une telle réalisation permet de réaliser un contact serrant entre l'orifice de traversée 8 et l'organe traversant, avec un contact mousse/organe, ce qui résout les problèmes rencontrés lorsque la couche poreuse 2 est un feutre, le contact feutre/organe pouvant ne pas être optimal en raison d'un effilochement du feutre, ce qui provoque des fuites acoustiques.

Selon la réalisation de la figure 4, la mousse déborde en périphérie de l'orifice 8 du côté de la couche poreuse 2. Ainsi, on peut générer un joint d'étanchéité évitant le montage d'un joint d'étanchéité spécifique sur l'organe traversant, ledit organe étant agencé de sorte à pouvoir comprimer la mousse de part et d'autre de l'orifice 8 selon l'axe dudit orifice.

Selon la réalisation de la figure 3, l'axe 11 de l'orifice de traversée est différent de l'axe 12 de l'orifice annexe 10, la mousse enrobant la paroi 13 de l'orifice annexe 10 selon une épaisseur variable. On peut ainsi réaliser une bonne étanchéité dans le cas de traversée d'organes inclinée par rapport au panneau 1 dans la zone de traversée.

Selon une variante non représentée, la mousse peut ne pas enrober la paroi 13 de l'orifice annexe 10, le contact serrant s'effectuant toujours entre la mousse et l'organe, malgré un effilochage éventuel de la couche poreuse 2 lorsqu'elle est à base de feutre.

Selon une réalisation non représentée, la couche poreuse 2 comprend au moins une zone conformée, par exemple en forme de plot, de sorte à former moyen de fixation et/ou de centrage.

Selon une réalisation non représentée, la couche poreuse 2 comprend une sous couche de revêtement, par exemple à base de moquette ou de non tissé, associée sur son envers à une sous couche poreuse, de sorte que le panneau 1 forme tapis de sol.

Selon une réalisation non représentée, la couche poreuse 2 comprend une sous couche principale, par exemple en feutre, associée sur son envers à une sous couche barrière poreuse, par exemple à base de non tissé co-aiguilleté avec ladite sous couche principale, ladite sous couche barrière présentant notamment une résistance au passage de l'air supérieure à celle de ladite sous couche principale et étant imprégnée de mousse, tout en laissant ladite sous couche principale sensiblement exempte de mousse de sorte qu'elle absorbe de façon optimale le bruit.

La présence d'une telle sous couche barrière permet d'éviter une trop forte pénétration de la mousse dans la couche poreuse 2, et ainsi de préserver au mieux ses propriétés d'absorption.

On peut prévoir que la couche d'envers 5 présente un coefficient d'amortissement supérieur à 0,25 de sorte à être viscoélastique, la couche poreuse 2 étant sensiblement rigide et montée de sorte à se trouver, en sensiblement tout point, à une distance inférieure à l'épaisseur correspondant à l'état libre de la couche d'envers 5 audit point, de sorte à comprimer ladite couche d'envers, par exemple de l'ordre de 2,5 à 10 %, sur sensiblement toute sa surface contre la paroi du véhicule, afin d'insonoriser les moyennes fréquences, selon un principe de couche contrainte.

## Revendications

1. Panneau (1) monobloc de protection acoustique d'habillage d'une paroi (20) de véhicule automobile, ledit panneau comprenant :
• au moins une première zone (3) comprenant, superposées successivement l'une sur l'autre, une couche poreuse (2) supérieure, une couche d'étanchéité (4) et une couche d'envers élastique (5) formant ressort, **caractérisé en ce que** ledit panneau comprenant
• au moins une deuxième zone (17,17a,17b) comprenant au maximum deux desdites couches.

2. Panneau selon la revendication 1, **caractérisé en ce qu'**une deuxième zone (17,17b) comprend exclusivement la couche élastique (5).

3. Panneau selon la revendication 1 ou 2, **caractérisé en ce qu'**une deuxième zone (17a) comprend exclusivement la couche poreuse (2).

4. Panneau selon l'une quelconque des revendications 1 à 3, **caractérisé en ce qu'**une deuxième zone (17) comprend exclusivement la couche d'étanchéité (4) et la couche élastique (5).

5. Panneau selon l'une quelconque des revendications 1 à 4, **caractérisé en ce qu'**il comprend une deuxième zone haute (17a) formée de couche poreuse (2), une première zone médiane (3) comprenant en outre une couche d'étanchéité (4) et une couche élastique (5), et une deuxième zone basse (17b) formée de couche élastique (5) ou de couche poreuse (2).

6. Panneau (1) selon l'une quelconque des revendications 1 à 5, **caractérisé en ce que** la couche d'envers (5) est à base de polyuréthane souple formant ressort, la couche d'étanchéité (4) étant formée par imprégnation d'une partie de l'épaisseur de la couche poreuse (2) par le polyuréthane de ladite couche d'envers surmoulant ladite couche poreuse.

7. Panneau selon la revendication 6, **caractérisé en ce que** la partie d'épaisseur de couche poreuse (2) imprégnée par le polyuréthanne représente une fraction inférieure à 25% de l'épaisseur de ladite couche poreuse.

8. Panneau selon la revendication 6 ou 7, **caractérisé en ce que** la couche poreuse (2) comprend deux sous couches.

9. Panneau selon la revendication 8, **caractérisé en ce que** la sous couche supérieure forme revêtement pour que ledit panneau forme tapis de sol.

10. Panneau selon la revendication 8 ou 9, **caractérisé en ce que** la sous couche inférieure forme barrière à l'imprégnation de la sous couche supérieure par le polyuréthane souple de la couche d'envers (5).

11. Panneau selon l'une quelconque des revendications 1 à 10, **caractérisé en ce que** la couche poreuse (2) présente une épaisseur et/ou une densité variable.

12. Architecture de montage d'un panneau selon l'une quelconque des revendications 1 à 11, **caractérisé en ce que** la couche d'envers (5) présente un coefficient d'amortissement supérieur à 0,25 de sorte à être viscoélastique, la couche poreuse (2) étant sensiblement rigide et montée de sorte à se trouver, en sensiblement tout point, à une distance inférieure à l'épaisseur correspondante à l'état libre de la couche d'envers (5) audit point, de sorte à comprimer ladite couche d'envers sur sensiblement toute sa surface contre la paroi du véhicule, afin d'insonoriser les moyennes fréquences.

13. Architecture de montage d'un panneau selon l'une quelconque des revendications 1 à 11, ledit panneau étant monté contre une paroi (20) de tunnel, une deuxième zone (17) comprenant exclusivement la couche élastique (5) ou la couche poreuse (2) étant recouverte par un tapis (18).

14. Architecture de montage d'un panneau selon la revendication 5, ledit panneau étant monté contre une paroi (20) de tablier, la zone haute (17a) étant disposée en regard d'une boite à eau (19) et réalisant une absorption acoustique et la zone basse (17b) étant recouverte par un tapis (18).

## Claims

1. Single-block sound protection panel (1) for cladding a wall (20) of an automotive vehicle, said panel including:
- at least one first area (3) comprising, successively stacked on one another, an upper porous layer (2), a sealing layer (4) and a back spring-like elastic layer (5), **characterised in that** said panel comprising
- at least one second area (17, 17a, 17b) including at most two of said layers.

2. Panel according to claim 1, **characterised in that** a second area (17, 17b) comprises exclusively the elastic layer (5).

3. Panel according to claim 1 or 2, **characterised in that** a second area (17a) comprises exclusively the porous layer (2).

4. Panel according to any of claims 1 to 3, **characterised in that** a second area (17) comprises exclusively the sealing layer (4) and the elastic layer (5).

5. Panel according to any of claims 1 to 4, **characterised in that** it comprises a second high area (17a) formed of a porous layer (2), a first median area (3) further comprising a sealing layer (4) and an elastic layer (5), and a second low area (17b) formed of an elastic layer (5) or porous layer (2).

6. Panel (1) according to any of claims 1 to 5, **characterised in that** the back layer (5) is of a spring-like flexible polyurethane base, the sealing layer (4) being formed via impregnation of a portion of the thickness of the porous layer (2) by the polyurethane of said back layer overmoulding said porous layer.

7. Panel according to claim 6, **characterised in that** the portion of thickness of the porous layer (2) impregnated by the polyurethane represents a fraction less than 25% of the thickness of said porous layer.

8. Panel according to claim 6 or 7, **characterised in that** the porous layer (2) comprises two sublayers.

9. Panel according to claim 8, **characterised in that** the upper sublayer forms a covering so that said panel forms a floor mat.

10. Panel according to claim 8 or 9, **characterised in that** the flower sublayer forms a barrier to the impregnation of the upper sublayer by the flexible polyurethane of the back layer (5).

11. Panel according to any of claims 1 to 10, **characterised in that** the porous layer (2) has a variable thickness and/or density.

12. Structure for mounting a panel according to any of claims 1 to 11, **characterised in that** the back layer (5) has a damping factor greater than 0.25 in such a way as to be viscoelastic, the porous layer (2) being substantially rigid and mounted in such a way as to be located, at substantially any point, at a distance less than the thickness corresponding to the free state of the back layer (5) at said point, in such a way as to compress said back layer over substantially all of its surface against the wall of the vehicle, so as to sound proof the medium frequencies.

13. Structure for mounting a panel according to any of claims 1 to 11, said panel being mounted against a tunnel wall (20), a second area (17) comprising exclusively the elastic layer (5) or the porous layer (2) being covered by a mat (18).

14. Structure for mounting a panel according to claim 5, said panel being mounted against a fire wall (20), the high area (17a) being arranged across from a water tank (19) and carrying out an acoustic absorption and the low area (17b) being covered by a mat (18).

## Patentansprüche

1. Einteilige Platte (1) zur Schalldämmung einer Verkleidung einer Wand (20) eines Kraftfahrzeugs, wobei die Platte
- mindestens eine erste Zone (3) mit einer porösen Oberschicht (2), einer Dichtungsschicht (4) und einer elastischen Rückschicht (5), die eine Federung bildet, umfasst, wobei die Schichten eine der anderen folgend übereinander gelagert sind, **dadurch gekennzeichnet, dass** die Platte
- mindestens eine zweite Zone (17, 17a, 17b) mit höchstens zwei der Schichten umfasst.

2. Platte nach Anspruch 1, **dadurch gekennzeichnet, dass** eine zweite Zone (17, 17b) ausschließlich die elastische Schicht (5) umfasst.

3. Platte nach Anspruch 1 oder 2, **dadurch gekennzeichnet, dass** eine zweite Zone (17a) ausschließlich die poröse Schicht (2) umfasst.

4. Platte nach einem der Ansprüche 1 bis 3, **dadurch gekennzeichnet, dass** eine zweite Zone (17) ausschließlich die Dichtungsschicht (4) und die elastische Schicht (5) umfasst.

5. Platte nach einem der Ansprüche 1 bis 4, **dadurch gekennzeichnet, dass** sie eine obere zweite Zone (17a), die von einer porösen Schicht (2) gebildet wird, eine mittlere erste Zone (3) mit zusätzlich einer Dichtungsschicht (4) und einer elastischen Schicht (5) und eine untere zweite Zone (17b) umfasst, die von einer elastischen Schicht (5) oder porösen Schicht (2) gebildet wird.

6. Platte (1) nach einem der Ansprüche 1 bis 5, **dadurch gekennzeichnet, dass** die Rückschicht (5) auf biegsamer Polyurethanbasis hergestellt ist und eine Federung bildet, wobei die Dichtungsschicht (4) durch Imprägnierung eines Teils der Dicke der porösen Schicht (2) mit dem Polyurethan der Rückschicht gebildet wird, die die poröse Schicht überformt.

7. Platte nach Anspruch 6, **dadurch gekennzeichnet, dass** der Teil der Dicke der porösen Schicht (2), der mit dem Polyurethan imprägniert ist, einen Anteil ausmacht, der weniger als 25% der Dicke der porösen Schicht beträgt.

8. Platte nach Anspruch 6 oder 7, **dadurch gekennzeichnet, dass** die poröse Schicht (2) zwei Unterschichten umfasst.

9. Platte nach Anspruch 8, **dadurch gekennzeichnet, dass** die obere Unterschicht einen Belag bildet, damit die Platte einen Teppichboden bildet.

10. Platte nach Anspruch 8 oder 9, **dadurch gekennzeichnet, dass** die untere Unterschicht eine Barriere für die Imprägnierung der oberen Unterschicht mit dem biegsamen Polyurethan der Rückschicht (5) bildet.

11. Platte nach einem der Ansprüche 1 bis 10, **dadurch gekennzeichnet, dass** die poröse Schicht (2) eine variable Dicke und/oder Dichte aufweist.

12. Montageaufbau einer Platte nach einem der Ansprüche 1 bis 11, **dadurch gekennzeichnet, dass** die Rückschicht (5) einen Dämpfungskoeffizienten größer als 0,25 aufweist, um viskoelastisch zu sein, wobei die poröse Schicht (2) im Wesentlichen starr und so befestigt ist, dass sie sich im Wesentlichen an jedem Punkt in einem Abstand befindet, der geringer ist als die entsprechende Dicke im freien Zustand der Rückschicht (5) am jeweiligen Punkt, um die Rückschicht auf ihrer im Wesentlichen gesamten Oberfläche gegen die Fahrzeugwand zu komprimieren, damit mittlere Frequenzen schallisoliert werden.

13. Montageaufbau einer Platte nach einem der Ansprüche 1 bis 11, wobei die Platte gegen eine Wand (20) eines Tunnels befestigt wird, wobei eine zweite Zone (17) ausschließlich die elastische Schicht (5) oder die poröse Schicht (2) umfasst, die von einem Teppich (18) überzogen ist.

14. Montageaufbau einer Platte nach Anspruch 5, wobei die Platte gegen eine Spritzwand (20) befestigt wird, wobei die obere Zone (17a) gegenüber einem Wasserkasten (19) angeordnet ist und eine Schallabsorption durchführt und die untere Zone (17b) von einem Teppich (18) überwogen ist.
